Europäisches Patentamt

European Patent Office

Office européen des brevets

(19)

(11) **EP 0 967 091 A1**

(12) **EUROPÄISCHE PATENTANMELDUNG**

(43) Veröffentlichungstag:
29.12.1999 Patentblatt 1999/52

(51) Int. Cl.6: **B42D 15/10**, G02B 27/60

(21) Anmeldenummer: 98810590.4

(22) Anmeldetag: 26.06.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder:
**Alusuisse Technology & Management AG
8212 Neuhausen am Rheinfall (CH)**

(72) Erfinder:
• **Zeiter, Patrik
8044 Zürich (CH)**
• **Lüthi, Markus
8406 Winterthur (CH)**
• **Lohwasser, Wolfgang
78262 Gailingen (DE)**

(54) **Gegenstand mit optischem Effekt**

(57)     Bei einem Gegenstand mit einem einen optischen Effekt erzeugenden Oberflächenbereich weist der Oberflächenbereich mit dem optischen Effekt mindestens zwei durch eine durchsichtige Materialschicht (10) in Abstand (d) gehaltene Rasterbilder (12, 14) auf. Der Abstand (d) zwischen den Rasterbildern (12, 14) und die Distanz (a) zwischen benachbarten, den Rasterbildern (12, 14) zugrundeliegenden Rasterelementen (16) sind so aufeinander abgestimmt, dass sich bei Änderung des Betrachtungswinkels ($\alpha$) die optische Wahrnehmung des durch die Überlagerung der Rasterbilder (12, 14) erzeugten Gesamtbildes ändert. Eine bevorzugte Verwendung des Gegenstandes liegt in der Form einer Verpackung, eines Packstoffes, eines Packhilfsmittels, eines Wertpapiers oder einer Eintrittskarte mit fälschungssicherem und/oder optisch ansprechendem Oberflächenbereich.

**Fig.1**

EP 0 967 091 A1

**Beschreibung**

Die Erfindung betrifft einen Gegenstand mit einem einen optischen Effekt erzeugenden Oberflächenbereich. Im Rahmen der Erfindung liegen auch Verfahren zur Herstellung des Gegenstandes sowie seine Verwendung.

Die Fälschungssicherheit von Verpackungen ist vor allem für die Pharmaindustrie von grosser Bedeutung. Grundsätzlich besteht jedoch auch in anderen Bereichen der Wunsch nach fälschungssicheren Verpackungen oder Produkten, insbesondere in der Konsumgüterindustrie, beispielsweise bei der Verpackung von Lebensmitteln, kosmetischen Artikeln, Kleidern, Software- und Musik CD's oder Wertpapieren. Der Gegenstand mit dem den optischen Effekt erzeugenden Oberflächenbereich kann eine Verpackung, ein Packstoff, ein Packhilfsmittel oder ein Produkt selbst sein, auf dem ein Oberflächenbereich in Form eines Sicherheitsteils, beispielsweise als Etikette, mit einem optischen Effekt ausgestattet ist.

Eine fälschungssichere Verpackung oder ein Packhilfsmittel kann als Originalitätsgarantie dienen, die es dem Kunden ermöglicht zu erkennen, dass das von ihm erworbene Produkt tatsächlich vom gewünschten Produzenten hergestellt und verpackt worden ist. Ein fälschungssicheres Packhilfsmittel kann u.a. auch als Erstöffnungsgarantie eingesetzt werden, beispielsweise in Form einer Etikette, einer Banderole oder eines Siegelstreifens usw., die z.B. über einem Flaschenverschluss oder über dem Verschluss eines Weithalsglases, über der Naht zwischen einem Deckel und einem Behälter oder über dem Aufreissverschluss eines Beutels festgelegt worden sind. Beim Öffnen der entsprechenden Verpackung wird die Etikette, die Banderole oder der Siegelstreifen zerstört und damit angezeigt, dass eine Erstöffnung bereits erfolgt ist. Es ist auch möglich, Gegenstände in eine Umverpackung zu füllen oder einzuhüllen, wobei die Umverpackung charakteristische unverwechselbare und nicht kopierbare Merkmale aufweist, welche zeigen, dass das Verpacken des Inhalts bei einem bestimmten Lieferanten erfolgt ist.

Bekannte fälschungssichere Verpackungen und Produkte sind auf ihrer Oberfläche mit Hologrammen versehen oder weisen Farbcodierungen oder unsichtbare Merkmale auf. Zur Erzielung einer hohen Fälschungssicherheit haben sich in der Praxis u.a. Hologramme bewährt. Beispiele sind Hologrammetiketten oder Deckelfolien mit integrierten Hologrammen. Die Erzeugung von Hobgrammen ist jedoch mit einem enormen Aufwand verbunden.

Der Erfindung liegt deshalb die Aufgabe zugrunde, zumindest ein Teil der Oberfläche von Gegenständen wie Verpackungen, Packstoffe, Packhilfsmittel oder Produkte selbst mit einem optischen Effekt auszustatten, der auf kostengünstige Weise hergestellt, jedoch nicht auf einfache Art gefälscht werden kann.

Zur erfindungsgemässen Lösung der Aufgabe führt, dass der Oberflächenbereich mit dem optischen Effekt mindestens zwei durch eine durchsichtige Materialschicht in Abstand gehaltene Rasterbilder aufweist, wobei der Abstand zwischen den Rasterbildern und die Distanz zwischen benachbarten, den Rasterbildern zugrundeliegenden Rasterelementen so aufeinander abgestimmt sind, dass sich bei Änderung des Betrachtungswinkels die optische Wahrnehmung des durch die Überlagerung der Rasterbilder erzeugten Gesamtbildes ändert.

Die Erfindung macht von einem, unter dem Begriff Moiré-Effekt bekannten Phänomen Gebrauch. Moiré-Muster sind zweidimensionale Abbildungen, die sich durch Interferenz von zwei sich überlagernden Rastern ergeben. Durch Verschiebung von zwei unmittelbar aufeinanderliegenden Rastern wechselt auch die Moiré-Interferenz, was zu den bekannten wechselnden Hell-Dunkel-Erscheinungen führt.

Die vorliegende Erfindung macht sich das Wechseln der Moiré-Interferenz ohne mechanische Verschiebung der Raster zunutze. Durch den gegenseitigen Abstand der Rasterbilder entsteht eine räumliche Anordnung, die bei Änderung des Betrachtungswinkels zu wechselnden Moiré-Interferenzen führt. Bei Verwendung von reflektierenden Materialien kann im Bereich des Reflexionswinkels anstelle von Moiré-Interferenzen ein Reflexionsbild eines der Rasterbilder beobachtet werden, während ausserhalb des Reflexionswinkelbereichs eine Moiré-Interferenz auftritt. Der wesentliche Kern der Erfindung liegt somit in der Bereitstellung eines dreidimensionalen Moiré-Musters.

Um den erfindungsgemässen Effekt zu erzeugen, sind die bereits von den Moiré-Mustern her bekannten Distanzen zwischen benachbarten Rasterelementen einzuhalten. Die Rasterbilder können aus einzelnen parallelen Linien oder auch punktförmig aufgebaut sein. Im einfachsten Fall eines Linienmusters ist die Distanz zwischen benachbarten Linien immer gleich. Bei einer einfachen Anordnung sind zwei identische Rasterbilder deckungsgleich in Abstand zueinander angeordnet. Es ist jedoch auch möglich, Bereiche eines Rasterbildes gegenüber dem anderen Rasterbild beispielsweise um die halbe Distanz zwischen benachbarten Rasterelementen zu verschieben oder mit einem anderen Rastermuster zu versehen, so dass sich bei Änderung des Betrachtungswinkels beispielsweise ein mehrfacher Hell-Dunkel-Wechsel ergibt. Selbstverständlich können Rasterbilder auch eine Kombination von geraden und gekrümmten Linien oder andere Rasterelementen enthalten. Auf diese Weise ist es beispielsweise möglich, Markennamen und dgl. Zeichen mit dreidimensionalem Moiré-Effekt in den Packstoff einzubauen. Zur weiteren Erhöhung der Fälschungssicherheit kann beispielsweise eines der Rasterbilder neben einem Linienraster noch eine zusätzliche Struktur enthalten.

Die durchsichtige Materialschicht kann beidseitig mit einem Rasterbild versehen sein. Eine andere Variante besteht darin, dass die durchsichtige Materialschicht aus mindestens zwei Telischichten aufgebaut ist und die Rasterbilder auf unterschiedlichen Teilschichten aufgebracht sind. Bei einer weiteren Variante ist eines der Rasterbilder auf einer undurchsichtigen Folie, beispielsweise auf einer Aluminiumfolie aufgebracht.

Anstelle von zwei aufgebrachten Rasterbildern kann eines der Rasterbilder das Spiegelbild des anderen Rasterbildes sein. In diesem Fall grenzt die durchsichtige Materialschicht einseitig an eine spiegelnde Schicht, beispielsweise eine Aluminiumfolie mit Hochglanzoberfläche.

Die Rasterbilder können in der Form von Farbendruckmustern aufgebracht sein. Hierbei können die Druckmuster monochrom oder mehrfarbig sein. Als zusätzliche Sicherheit können Farben eingesetzt werden, die den Moiré-Effekt erst im UV- oder IR-Licht erkennbar machen. Eine andere Möglichkeit besteht darin, dass zumindest ein Rasterbild in der Form einer Oberflächenstruktur mit höhenversetzten Strukturteilen ausgestaltet ist, z.B. als Präge- oder Ätzmuster. Präge-oder Ätzmuster sind beispielsweise zum Aufbringen eines Rasterbildes auf einer Aluminiumfolie geeignet.

Die Herstellung des erfindungsgemässen Gegenstandes erfolgt nach bekannten Verfahren. Das Aufbringen der Rasterbilder kann beispielsweise durch gleichzeitiges Bedrucken der beiden Seiten einer durchsichtigen Kunststofffolie erfolgen. Die einzelnen Rasterbilder können aber auch auf unterschiedliche Folien aufgedruckt werden. Die einzelnen, mit jeweils einem Rasterbild bedruckten Folien werden anschliessend durch Kaschierung zum Packstoff zusammengefügt. Die Fälschungssicherheit wird dadurch noch erhöht, dass die Kaschierung auf einer Maschine mit hochpräzisen Druckmarkensteuerungen erfolgen muss.

Der erfindungsgemässe Gegenstand kann beispielsweise ein beliebiges Verpackungsmaterial in der Form eines Packstoffes oder Packhilfsmittels sein, welches eine durchsichtige Materialschicht aufweist, wobei zusätzlich erfindungsgemäss Rasterbilder aufgebracht sind. Der Packstoff kann starr, halbstarr oder flexibel sein und kann ein Formkörper oder insbesondere ein folienförmiges Material darstellen. Beispiele für Formkörper sind geblasene, tief- und/oder streckgezogene oder getiefte Formkörper, wie Flaschen, Weithalsgefässe, Becher, Schalen oder Bodenteile von Durchdrückpackungen oder Blisterpackungen. Beispiele für folienförmige Materialien sind Metallfolien, wie Aluminium-, Stahl-, Kupfer-, Silber- oder Goldfolien. Weitere Beispiele für folienförmige Materialien sind Papiere, wie Seidenpapier mit einem Flächengewicht von 20 bis 30g/m$^2$ oder Hochweisspapier mit einem Flächengewicht von 40 bis 60g/m$^2$, Karton, Halbkarton oder dgl. Bedeutsam sind insbesondere kunststoffhaltige Folien, z.B. auf der Basis von Polyolefinen, wie Polyethylenen oder Polypropylenen, Polyamiden, Polyvinylchlorid, Polyestern, wie Polyalkylenterephthalaten und insbesondere Polyethylenterephthalat. Die kunststoffhaltigen Folien können Monofolien aus Kunststoffen, Laminate aus zwei oder mehreren Kunststofffolien, Laminate aus Metall- und Kunststofffolien, Laminate aus Papieren und Kunststofffolien oder Laminate aus Papieren und Metall- und Kunststofffolien sein. Die einzelnen Kunststofffolien können eine Dicken von bei-spielsweise 12 bis 200μm und die Metallfolien von 12 bis 100 μm aufweisen. Die einzelnen Schichten der folienförmigen Materialien können mittels Klebstoffen, Kaschierklebern, Haftvermittlern und/oder durch Extrusionsbeschichten, Coextrusion oder Kaschieren usw. aneinander festgelegt werden. Als Kunststofffolien bevorzugt sind nicht orientierte oder axial oder biaxial orientierte Monofolien oder Laminate aus zwei oder mehreren nicht orientierten oder axial oder biaxial orientierten Folien aus Kunststoffen auf der Basis von Polyolefinen, wie Polyethylenen oder Polypropylenen, Polyamiden, Polyvinylchlorid, Polyestern, wie Polyalky-lenterephthalaten und insbesondere Polyethylenter-ephthalat.

Die vorstehend erwähnten Verpackungsmate-rialien können die erfindungsgemässen Gegenstände in der Form von Packstoffen oder Packhilfsmitteln bilden. Beispielsweise können aus folienförmigen Packstoffen durch Ausstanzen und Siegeln Beutel, Sachets, Einwickler, Taschen usw. hergestellt werden. Folien können durch Tief- und/oder Streckziehen zu Formpak-kungen oder Formkörpern, wie Bodenteilen von Durchdrück- oder Blisterpackungen oder zu Weithalsgefässen, Menuschalen, Gobelets, Bechern usw. verformt werden. Es können aus den Folien z.B. Tuben (Laminattuben) oder Deckel für Formpackungen hergestellt werden. Aus beispielsweise kartonhaltigen Substraten können Schachteln, wie Faltschachteln, hergestellt werden. Es ist auch möglich, z.B. Flaschen, aus Kunststoffen geblasen, oder vorgeformte Formpackungen als Substrate zu verwenden und die erfindungsgemässe durchsichtige Materialschicht darauf anzubringen. Verschlüsse, Öffnungen, Nähte, Nahte zwischen einem Bodenteil und dem dazugehörigen Deckel usw. können mit einem erfindungsgemässen Packhilfsmittel in Form einer Etikette, eines Siegelstreifens, einer Banderole, eines Garantiesiegels oder einer Überschliessung versehen werden. Diese letztgenannten Packhilfsmittel liegen in der Regel folienförmig vor und werden auf dem entsprechenden Behälter über der Öffnung und am angrenzenden Behälterteil fixiert, wie beispielsweise festgeklebt, engeschweisst, aufgebördelt oder aufgeschrumpft usw. . Das Packhilfsmittel weist die erfindungsgemässe durchsichtige Materialschicht und die durch diese in Abstand gehaltenen Rasterbilder auf. Der erfindungsgemässe Aufbau der Oberfläche bzw. eines Oberflächenbereichs des Gegenstandes führt zu der gezielt angestrebten optischen Erscheinung bei Änderung des Betrachtungswinkels. Eine Fälschung durch Fotokopieren und Verwendung der Fotokopie als Originalitäts- oder Herstellergarantie wäre sofort und leicht erkennbar, da eine Änderung des Betrachtungswinkels den bei erfindungsgemässem Aufbau auftretenden optischen Effekt nicht zeigt. Damit Packhilfsmittel, beispielsweise Siegelstreifen oder Banderolen, vom Verbraucher leicht gebrochen werden können, kann es zweckmässig sein, Anreisshilfen wie Schwächungen, Kerben oder Abreisszungen vorzusehen. Es können als Bestandteil von Packstoffen oder Packhilfsmitteln auch leicht einreissbare oder durchstossbare Folien, wie mit Füllstoffen angereicherte Kunststofffolien oder aus zwei schlecht verträglichen Kunststofffolien hergestellte Folien angewendet werden.

Neben der bereits erwähnten Verwendung des erfindungsgemässen Gegenstandes in der Form einer Verpackung, eines Packstoffes oder eines Packhilfsmittels ist ein weiteres Arwendungsgebiet die fälschungssichere Herstellung von Wertpapieren, Eintrittskarten und dergleichen Dokumenten, wobei neben der fälschungssicheren Ausgestaltung auch dekorative Spezialeffekte erzeugt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in

- Fig. 1      das Prinzip der dreidimensionalen Moiré-Interferenz, gezeigt am Schnitt durch eine erfindungsgemässe Anordnung von Rasterbildern;

- Fig. 2 bis 7      Schnitte durch Beispiele von Folien mit erfindungsgemäss angeordneten Rasterbildern.

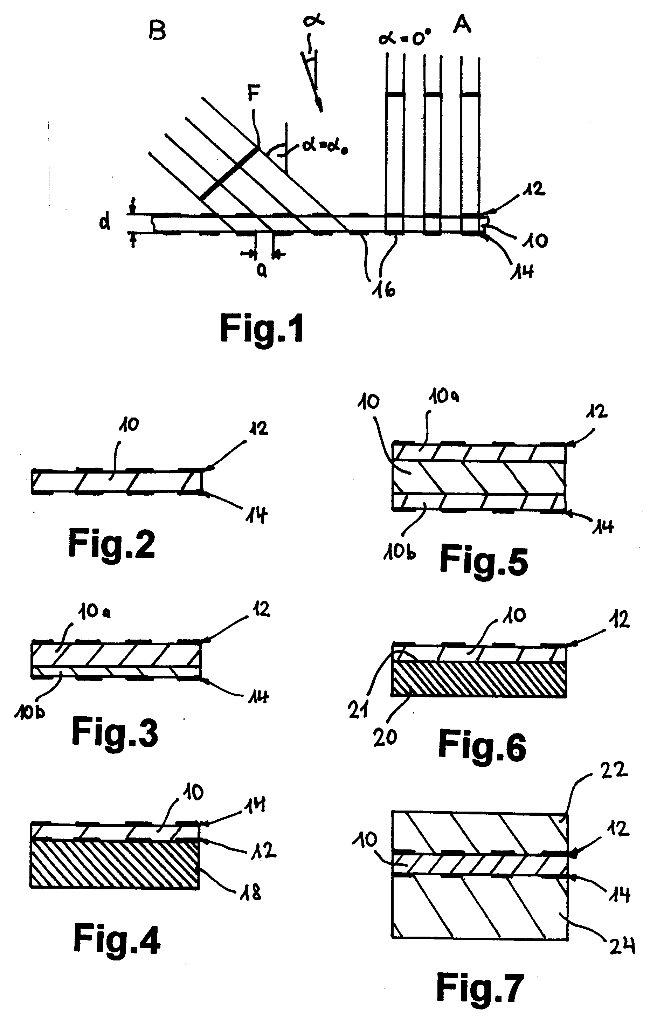

Fig.1 zeigt eine durchsichtige Materialschicht 10 mit beidseits in Abstand d angeordneten Rasterbildern 12, 14 in der Form von aus einzelnen Linien 16 aufgebauten Rastern. Die Distanz a zwischen den einzelnen Rasterlinien 16 ist im vorliegenden Beispiel immer gleich und entspricht der Auflösung. Aus der Zeichnung ist ohne weiteres verständlich, dass der Beobachter unter dem Betrachtungswinkel $\alpha = 0°$ (A) das Rastbild 12, 14 im Original sieht. Unter einem bestimmten Betrachtungswinkel $\alpha_0$ (B) ergibt sich für den Beobachter eine schwarze Fläche F. Für einen Betrachtungswinkel $\alpha$ zwischen $\alpha_0$ und 0° zeigt sich für den Beobachter ein Rasterbild mit progressiv zu- bzw. abnehmender Breite der einzelnen Rasterlinien 16. Für den dreidimensionalen Moiré-Effekt ist der Grenzwinkel $\alpha_0$ entscheidend; ist er zu gross, so sind für eine Beobachtung der wechselnden Moiré-Interferenzen grosse Winkeländerungen erforderlich, d.h. der Effekt ist nur schwach erkennbar. Der optimale Wert für den Grenzwinkel $\alpha_0$ liegt beispielsweise bei 20°. Der Grenzwinkel $\alpha_0$ ist direkt vom Abstand d der beiden Rasterbilder sowie von der Auflösung a abhängig, wobei folgende mathematische Beziehung gilt:

$$a = d \cdot tg\ \alpha_0.$$

Da die für die durchsichtige Materialschicht 10 üblicherweise eingesetzten Kunststofffolien bzw.- filme Dicken zwischen etwa 7µm und 200 µm aufweisen, ergibt sich eine sehr feine und daher fälschungssichere Auflösung a. Aufgrund der mathematischen Beziehung zwischen dem Abstand d der beiden Rasterbilder 12, 14 bzw. der Dicke der durchsichtigen Materialschicht 10 und der Distanz a zwischen den einzelnen Rasterlinien 16 kann die optimale Auflösung für einen gegebenen Schichtaufbau auf einfache Weise ermittelt werden.

Die Fig. 2 bis 7 zeigen Beispiele von Rasterbildanordnungen.

Gemäss Fig. 2 ist eine durchsichtige Kunststofffolie 10 beidseitig mit den Rasterbildern 12, 14 bedruckt.

Fig. 3 zeigt eine durchsichtige Kunststofffolie 10, die aus zwei Teilfolien 10a, b aufgebaut ist. Die Rasterbilder 12, 14 sind auf die äusseren Flächen der Teilfolien 10a, b aufgebracht. Eine derartige Anordnung kann beispielsweise so hergestellt werden, dass beide Teilfolien 10a, b zunächst mit je einem Rasterbild 12, 14 bedruckt und die bedruckten Teilfolien nachfolgend durch Kaschieren zusammengefügt werden.

Fig. 4 zeigt eine Aluminiumfolie 18, die mit einem ersten Rasterbild 12 bedruckt ist. Diese bedruckte Aluminiumfolie 18 ist gegen eine mit dem zweiten Rasterbild 14 bedruckte durchsichtige Kunststoffolie 10 kaschiert.

Gemäss Fig. 5 ist eine durchsichtige Kunststofffolie 10 zwischen zwei mit je einem Rasterbild 12, 14 bedruckten durchsichtigen Kunststofffolien 10a, b kaschiert.

Bei dem in Fig. 6 gezeigten Beispiel ist eine durchsichtige Kunststofffolie 10 auf eine Aluminiumfolie 20 mit Hochglanzoberfläche 21 kaschiert. Hierbei ist nur die durchsichtige Kunststofffolie 10 einseitig mit einem Rasterbild 12 bedruckt. Die dreidimensionale Moiré-Interferenz ergibt sich hier aus dem Rasterbild 12 und seinem durch die Hochglanzoberfläche 21 erzeugten Spiegelbild.

Die in Fig. 7 dargestellte Anordnung ist für eine Betrachtung im durchscheinenden Licht geeignet Sie entspricht der Ausführung von Fig. 2 mit zusätzlichen, beidseits gegen die Materialschicht 10 kaschierten Deckschichten 22, 24 in Form von durchsichtigen Kunststoffilmen.

Die Erfindung ist nicht auf die gezeigten Ausführungsformen beschränkt, sondern umfasst vielmehr alle Gegenstände mit einem erfindungsgemässen Schichtaufbau in zumindest einem Oberflächenbereich. Insbesondere können weitere Filme oder Folien den Schichtaufbau zu einem beliebigen Verpackungsmaterial ergänzen, oder der erfindungsgemässe Schichtaufbau kann direkt an einem Produkt angebracht werden.

## Patentansprüche

1. Gegenstand mit einem einen optischen Effekt erzeugenden Oberflächenbereich,
dadurch gekennzeichnet, dass

der Oberflächenbereich mit dem optischen Effekt mindestens zwei durch eine durchsichtige Materialschicht (10) in Abstand (d) gehaltene Rasterbilder (12, 14) aufweist, wobei der Abstand (d) zwischen den Rasterbildern (12, 14) und die Distanz (a) zwischen benachbarten, den Rasterbildern (12, 14) zugrundeliegenden Rasterelementen (16) so aufeinander abgestimmt sind, dass sich bei Änderung des Betrachtungswinkels ($\alpha$) die optische Wahrnehmung des durch die Überlagerung der Rasterbilder (12, 14) erzeugten Gesamtbildes ändert.

2. Gegenstand nach Anspruch 1, dadurch gekennzeichnet, dass die durchsichtige Materialschicht (10) beidseitig mit einem Rasterbild (12, 14) versehen ist.

3. Gegenstand nach Anspruch 1, dadurch gekennzeichnet, dass die durchsichtige Materialschicht (10) aus mindestens zwei Teilschichten (10a, b) aufgebaut ist und die Rasterbilder (12, 14) auf unterschiedlichen Teilschichten (10a, b) aufgebracht sind.

4. Gegenstand nach Anspruch 1, dadurch gekennzeichnet, dass eines der Rasterbilder (12) auf einer undurchsichtigen Folie, insbesondere auf einer Aluminiumfolie (18) aufgebracht ist.

5. Gegenstand nach Anspruch 1, dadurch gekennzeichnet, dass die durchsichtige Materialschicht (10) einseitig an eine spiegelnde Schicht grenzt und ein zweites Rasterbild das Spiegelbild eines ersten Rasterbildes (12) ist.

6. Gegenstand nach Anspruch 5, dadurch gekennzeichnet, dass die spiegelnde Schicht eine Aluminiumfolie (20) mit Hochglanzoberfläche (21) ist.

7. Gegenstand nach einem der Ansprüche 1 bis 6, dadurch gekennzeichnet, dass die durchsichtige Materialschicht (10) reflektierend ist, so dass im Bereich des Reflexionswinkels ein Reflexionsbild und ausserhalb des Bereichs des Reflexionswinkel eine Moiré-Interferenz beobachtet wird.

8. Gegenstand nach einem der Ansprüche 1 bis 7, dadurch gekennzeichnet, dass zumindest ein Rasterbild (12, 14) als Farbendruckmuster aufgebracht ist.

9. Gegenstand nach Anspruch 8, dadurch gekennzeichnet, dass zumindest ein Rasterbild (12, 14) als ein erst im UV- oder im IR-Licht sichtbares Farbendruckmuster aufgebracht ist.

10. Gegenstand nach einem der Ansprüche 1 bis 9, dadurch gekennzeichnet, dass zumindest ein Rasterbild (12, 14) in der Form einer Oberflächenstruktur mit höhenversetzten Strukturteilen ausgestaltet ist.

11. Gegenstand nach Anspruch 10, dadurch gekennzeichnet, dass zumindest ein Rasterbild (12, 14) als Präge- oder Ätzmuster aufgebracht ist.

12. Gegenstand nach einem der Ansprüche 1 bis 11, dadurch gekennzeichnet, dass Bereiche eines Rasterbildes (14) zum anderen Rasterbild (12) insbesondere um die halbe Distanz (a) zwischen benachbarten Rasterelementen (16) gegeneinander verschoben sind.

13. Verfahren zur Herstellung eines Gegenstandes, nach Anspruch 1, dadurch gekennzeichnet, dass die Rasterbilder (12, 14) auf verschiedene Teilschichten (10a,b) aufgebracht und die Telischichten (10a,b) durch Kaschieren zur Materialschicht (10) zusammengefügt werden.

14. Verfahren zur Herstellung eines Gegenstandes nach Anspruch 1, dadurch gekennzeichnet, dass eine Kunststoffolie (10) auf beiden Seiten mit den Rasterbildern (12.14) bedruckt wird.

15. Verwendung eines Gegenstandes, nach einem der Ansprüche 1 bis 12 in der Form einer Verpackung, eines Packstoffes, eines Packhilfsmittels, eines Wertpapiers, einer Eintrittskarte oder dgl. Dokumente mit fälschungssicherem und/oder optisch ansprechendem Oberflächenbereich.

Fig.1

Fig.2

Fig.3

Fig.4

Fig.5

Fig.6

Fig.7

Europäisches
Patentamt

EUROPÄISCHER RECHERCHENBERICHT

Nummer der Anmeldung

EP 98 81 0590

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 632 430 A (WICKER RALPH C) 30. Dezember 1986 * Zusammenfassung; Abbildungen 3,6,7 * * Spalte 1, Zeile 26 - Zeile 59 * --- | 1,13-15 | B42D15/10 G02B27/60 |
| A | EP 0 778 159 A (I D TEC S L) 11. Juni 1997 * Zusammenfassung; Abbildungen 1,6,7 * * Spalte 2, Zeile 31 - Zeile 55 * * Spalte 8, Zeile 20 - Zeile 34 * --- | 1,13-15 | |
| A | US 4 662 653 A (GREENAWAY DAVID L) 5. Mai 1987 * Zusammenfassung; Abbildung 2 * * Spalte 2, Zeile 11 - Zeile 55 * --- | 1,13-15 | |
| A | US 4 519 155 A (GALLAGHER TERENCE J ET AL) 28. Mai 1985 * Zusammenfassung; Abbildungen 1-3 * * Spalte 2, Zeile 28 - Spalte 3, Zeile 62 * ----- | 1,13-15 | |

RECHERCHIERTE SACHGEBIETE (Int.Cl.6)

B42D
G02B

Der vorliegende Recherchenbericht wurde für alle Patentansprüche erstellt

| Recherchenort | Abschlußdatum der Recherche | Prüfer |
|---|---|---|
| DEN HAAG | 25. November 1998 | Jakober, F |

EPO FORM 1503 03.82 (P04C03)

# ANHANG ZUM EUROPÄISCHEN RECHERCHENBERICHT
## ÜBER DIE EUROPÄISCHE PATENTANMELDUNG NR.

EP 98 81 0590

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-11-1998

| Im Recherchenbericht angeführtes Patentdokument | Datum der Veröffentlichung | Mitglied(er) der Patentfamilie | Datum der Veröffentlichung |
|---|---|---|---|
| US 4632430 A | 30-12-1986 | US 4684593 A | 04-08-1987 |
| EP 0778159 A | 11-06-1997 | WO 9633873 A | 31-10-1996 |
| US 4662653 A | 05-05-1987 | CH 661368 A<br>DE 3469616 A<br>EP 0151706 A | 15-07-1987<br>07-04-1988<br>21-08-1985 |
| US 4519155 A | 28-05-1985 | WO 8300766 A<br>AU 7534981 A<br>CA 1194054 A<br>DK 161783 A<br>EP 0085673 A<br>FI 831264 A<br>JP 58501598 A | 03-03-1983<br>08-03-1983<br>24-09-1985<br>13-04-1983<br>17-08-1983<br>14-04-1983<br>22-09-1983 |

Für nähere Einzelheiten zu diesem Anhang : siehe Amtsblatt des Europäischen Patentamts, Nr.12/82